Europäisches Patentamt

European Patent Office

Office européen des brevets

(11) Numéro de publication : **0 180 506**
**B1**

(12) **FASCICULE DE BREVET EUROPÉEN**

(45) Date de publication du fascicule du brevet :
03.01.90

(51) Int. Cl.⁵ : **H 02 H   3/33**, H 02 H  11/00

(21) Numéro de dépôt : **85402005.4**

(22) Date de dépôt : **16.10.85**

(54) **Dispositif de sécurité pour appareil de protection différentielle.**

(30) Priorité : **30.10.84 FR 8416546**

(43) Date de publication de la demande :
**07.05.86 Bulletin 86/19**

(45) Mention de la délivrance du brevet :
**03.01.90 Bulletin 90/01**

(84) Etats contractants désignés :
**BE CH DE GB IT LI NL SE**

(56) Documents cités :
**DE–B– 1 175 349
GB–A– 2 135 542
IBM TECHNICAL DISCLOSURE BULLETIN, vol. 13,
no. 10, mars 1971, page 3167, New York, US; M.
PARRISH: "Ground-fault protection circuit for power
system"**

(73) Titulaire : **TELEMECANIQUE
43-45, Boulevard Franklin Roosevelt
F-92504 Rueil-Malmaison Cedex (FR)**

(72) Inventeur : **Gyöngyösi, Andras
30, rue de Belat
F-16000 Angouleme (FR)**
Inventeur : **Bielicki, Edmond
7, rue d'Aquilon
F-95120 Ermont (FR)**
Inventeur : **Dumortier, Bernard
25, rue du Belvédaire La Roseraie
F-78750 Mareil Marly (FR)**

(74) Mandataire : **Marquer, Francis et al
35, Avenue Victor Hugo
F-78960 Voisins le Bretonneux (FR)**

EP 0 180 506 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de sécurité pour un appareil de protection d'installation électrique capable de détecter un courant différentiel résiduel selon le préambule de la revendication 1.

L'invention est applicable à des appareils de protection différentielle contre les contacts directs ou indirects, ces appareils visant à obtenir une coupure et/ou une signalisation.

De nombreux appareils de ce genre ont été déjà proposés. Ainsi, par exemple le brevet DE-B-1 175 349 décrit un appareil de sécurité faisant intervenir un détecteur de courant différentiel traversé par un conducteur de phase et par un conducteur de neutre, ainsi qu'un moyen de polarisation consistant en un commutateur statique bidirectionnel monté entre une prise de terre et un point du conducteur de neutre située en aval du détecteur de courant différentiel.

Ce dispositif connu est agencé de façon à assurer une protection contre les contacts indirects même pour le cas d'une rupture du conducteur de mise à la terre.

La mise en œuvre de l'invention s'effectue de préférence sur des réseaux dont le neutre, distribué et séparé du conducteur de protection, est mis à la terre. Pour cela, le dispositif de sécurité est du type agencé pour détecter une coupure du neutre sans discontinuité d'alimentation et il est raccordé à cet effet à un conducteur de phase et à un conducteur de neutre appartenant à un réseau de distribution de courant alternatif.

Pour augmenter la sécurité d'utilisation d'un appareil de protection différentielle, il est connu d'associer à un tel appareil un dispositif d'alimentation à circuit redresseur muni d'une borne de liaison avec le conducteur de phase, d'une borne de liaison avec le conducteur de neutre et d'une borne reliée à une prise de terre par l'intermédiaire d'un deuxième circuit redresseur ; ce circuit permet donc l'alimentation du détecteur de courant différentiel en cas de coupure du neutre moyennant une redondance du circuit redresseur.

Un tel dispositif offre pour principaux inconvénients de nécessiter une duplication du circuit redresseur et, pour détecter l'absence ou la disparition du neutre, un organe spécifique tel qu'un enroulement spécial sur le tore de détection de courant différentiel, ou bien une résistance disposée sur le fil reliant la prise de terre au deuxième circuit redresseur et un organe convertisseur tension/courant voué uniquement à cette fonction de détection, ou encore un dispositif spécial de signalisation.

La présente invention a notamment pour but d'éviter ces inconvénients en proposant un dispositif de sécurité pour appareil de protection différentielle qui permet d'utiliser le détecteur de courant différentiel pour détecter de manière simple l'absence du neutre tout en poursuivant l'alimentation du pont redresseur sans nécessiter l'adjonction d'autres éléments détecteurs ou redresseurs.

Elle a également pour but de procurer une sécurité positive de fonctionnement de l'appareil de protection en cas de courant de défaut et/ou de coupure du neutre.

L'invention concerne un dispositif de sécurité pour appareil de protection d'installation électrique, l'appareil de protection étant muni d'un détecteur de courant différentiel résiduel traversé par un conducteur de phase et un conducteur de neutre, et d'un circuit électronique de traitement du signal de courant différentiel délivré par le détecteur, le dispositif de sécurité présentant des moyens de polarisation de sécurité comprenant un commutateur statique bidirectionnel, connectés à une prise de terre.

Selon l'invention, ce dispositif est plus particulièrement caractérisé en ce que :

le circuit électronique de traitement est alimenté par un pont redresseur relié aux conducteurs de phase et de neutre,

les bornes alternatives du pont redresseur sont respectivement raccordées à des points des parties du conducteur de phase et de neutre situées en aval du détecteur de courant différentiel de l'appareil de protection, et

le commutateur statique bidirectionnel est relié par l'intermédiaire de deux impédances respectives aux deux bornes alternatives du pont.

On constate que la détection de coupure du neutre s'effectue ainsi par l'intermédiaire du détecteur de courant différentiel sans nécessiter d'organe détecteur supplémentaire et que la fermeture du commutateur statique résulte directement de l'élévation de tension entre la prise de terre et le conducteur de phase et/ou de neutre sans nécessiter d'organe redresseur supplémentaire.

Le commutateur statique bidirectionnel peut être constitué soit par un triac monté entre la prise de terre et les deux bornes alternatives du pont redresseur, la gâchette du triac étant reliée par l'intermédiaire d'une résistance à la partie du conducteur de neutre comprise entre la borne alternative correspondante du pont redresseur et le détecteur de courant différentiel, soit par un couple de diodes Zener montées en opposition ou en antiparallèle entre la prise de terre et les deux bornes alternatives du pont redresseur afin de former un autocommutateur, pour établir en amont du pont redresseur dès la coupure du neutre une liaison phase-terre assurant la poursuite de l'alimentation du pont.

Une impédance de préférence capacitive ou fortement capacitive et de valeur élevée est avantageusement disposée sur la liaison entre le conducteur de phase et une borne alternative du pont redresseur.

Il est avantageux de combiner au dispositif de sécurité décrit un organe de test manuel de l'appareil de protection différentielle en prévoyant un interrupteur à ouverture actionnable par l'organe de test, cet interrupteur étant disposé sur la partie du conducteur de neutre située en aval du détecteur de courant différentiel.

Un mode de réalisation préféré concerne un appareil de protection différentielle muni du dispositif de sécurité selon l'invention.

Plusieurs modes de réalisation de l'invention vont être décrits ci-après à titre d'exemples non limitatifs avec référence aux dessins annexés.

La figure 1 est le schéma d'un appareil de protection différentielle muni du dispositif de sécurité positive conforme à l'invention ;

Les figures 2 et 3 montrent un mode de réalisation du dispositif de sécurité à commutateur statique comprenant respectivement un triac et deux diodes Zener ;

La figure 4 montre le dispositif de sécurité muni d'un organe de test manuel.

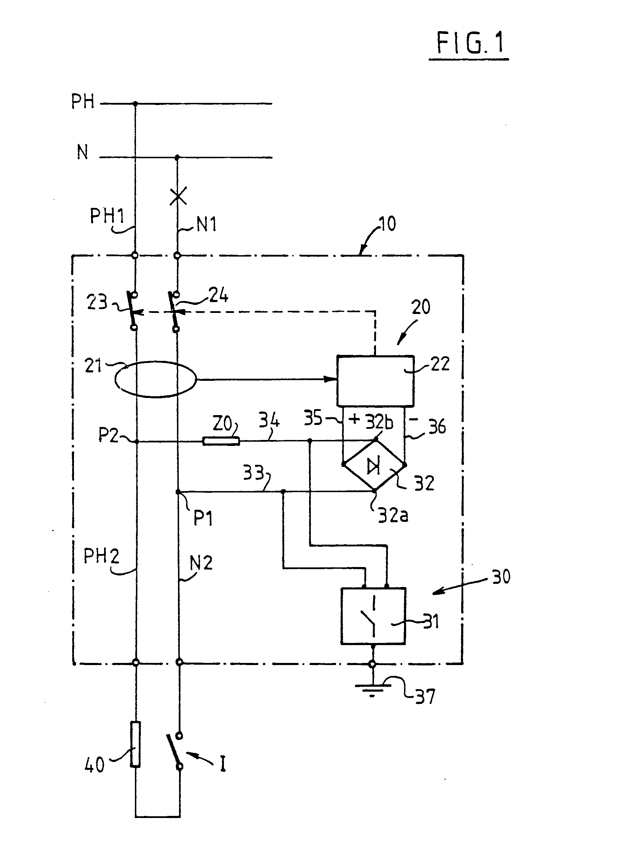

L'appareil de protection différentielle 10 représenté sur la figure 1 est connecté à un réseau de distribution de courant alternatif, par exemple aux conducteurs de phase PH et de neutre N d'un secteur basse tension. L'appareil 10 comporte un ensemble interrupteur ou disjoncteur 20 et un dispositif de sécurité positive 30 conforme à l'invention.

L'ensemble disjoncteur 20 présente un détecteur 21, un circuit électronique de traitement 22 et deux contacts 23, 24 ; le détecteur 21 est classique et détecte, par exemple au moyen d'un tore doté d'enroulements, le courant différentiel résiduel susceptible d'apparaître entre phase et neutre ; le circuit de traitement 22 assure l'amplification et le traitement du signal de courant différentiel produit par le détecteur 21 afin d'agir par l'intermédiaire d'un organe de déclenchement électromécanique non représenté sur les contacts 23, 24 afin d'ouvrir ceux-ci. Les contacts 23, 24 sont disposés sur les dérivations PH1, N1 des conducteurs PH et N alimentant une charge 40 déconnectable au moyen d'un interrupteur I.

Le dispositif de sécurité positive 30 comporte un commutateur statique bidirectionnel 31 associé à un pont redresseur 32 ; en temps normal le dispositif 30 est polarisé à partir des conducteurs PH et N via deux conducteurs, l'un de neutre 33 et l'autre de phase 34 raccordés en P1, P2 aux fils N et PH. Les conducteurs 33, 34 sont connectés d'autre part aux bornes de courant alternatif du pont redresseur, tandis que les bornes de courant continu du pont sont reliées via les fils 35, 36 au circuit de traitement 22 de l'ensemble disjoncteur 20. Une impédance ZO fortement capacitive est prévue sur le conducteur 34.

Le commutateur 31 est monté entre une prise de terre 37 et la partie PH2 du conducteur de phase ou N2 du conducteur de neutre située en aval du détecteur 21 de l'ensemble disjoncteur 20. Ce montage s'effectue de préférence par le raccordement du commutateur aux conducteurs 33, 34 de sorte que le commutateur est relié directement aux deux bornes 32a, 32b de tension alternative du pont redresseur.

Le dispositif de la figure 1 fonctionne de la manière suivante : en cas de coupure du neutre en amont de l'appareil de protection comme figuré par une croix sur la figure 1 et en fonction de l'élévation alors observée de la tension détectée entre le conducteur 33 ou 34 et le conducteur de terre 37, le commutateur 31 devient passant et établit la liaison prise de terre 37 et conducteurs PH 34-neutre 33.

Ceci entraîne l'apparition d'un courant de défaut capté par le détecteur 21 et traité par le circuit électronique 22 qui commande l'ouverture des contacts 23, 24.

Simultanément, le commutateur permet, par la liaison qu'il établit entre les bornes 32a, 32b du pont redresseur et le conducteur de terre, de poursuivre l'alimentation du pont et donc du circuit électronique de traitement 22.

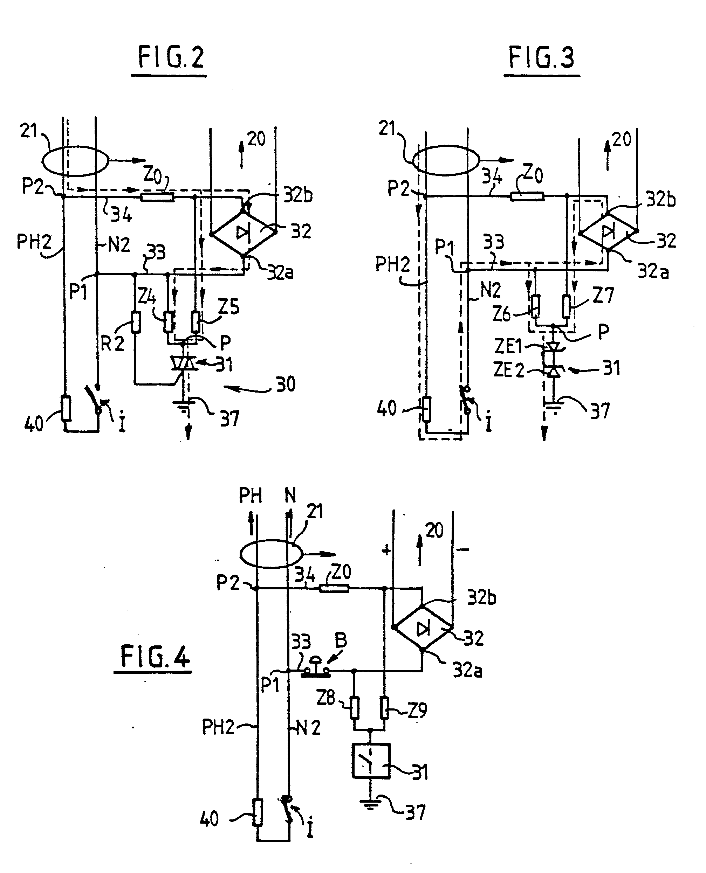

Dans le mode de réalisation de la figure 2, le commutateur statique 31 est un triac dont l'une des bornes est reliée à la terre 37 et dont l'autre borne est reliée à un point commun P lui-même relié, d'une part, au neutre 33 par une impédance Z4, d'autre part, à la phase 34 par une impédance Z5. La gâchette du triac est reliée au fil 33 par une résistance R2 qui permet d'ajuster le courant d'allumage du triac.

Sur la figure 3, le commutateur statique bidirectionnel 31, constitué par un couple de diodes Zener ZE1, ZE2 disposées en montage opposé ou tête-bêche, est relié, d'une part, à la terre 37 et, d'autre part, à un point P lui-même relié à travers une impédance Z6 au neutre 33 et à travers une impédance Z7 à la phase 34. Le commutateur se ferme après que la tension Zener des diodes ZE1, ZE2 ait été atteinte, lors d'une coupure du neutre.

On constate que le dispositif de sécurité des figures 2, 3 fonctionne de manière satisfaisante que l'interrupteur I soit ouvert ou fermé. Il a été indiqué sur les figures 2 et 3 en tirets le trajet du courant lorsque le neutre est coupé, respectivement en cas d'ouverture de l'interrupteur I (figure 2) et de fermeture de l'interrupteur I (figure 3).

Au commutateur bidirectionnel 31 illustré figure 4 est associé un organe de test manuel de l'appareil de protection 10. Cet organe de test présente par exemple un bouton-poussoir dont seul est représenté un interrupteur B à ouverture disposé sur le conducteur 33 ou en tout autre endroit du conducteur de neutre compris entre le détecteur de courant différentiel 21 et le commutateur statique 31.

Pour vérifier le bon fonctionnement de l'ensemble disjoncteur 20, l'utilisateur appuie sur le poussoir de test, ce qui ouvre l'interrupteur B et simule ainsi une coupure du neutre 33 ou N2 de manière à produire le déclenchement de l'ensemble disjoncteur 20. De la sorte, l'utilisateur est en mesure de tester en même temps le bon fonctionnement du dispositif de sécurité 30 et de l'ensemble disjoncteur 20.

Dans les modes d'exécution des figures 2, 3 et 4, les impédances Z4 et Z5, Z6 et Z7, Z8 et Z9 sont choisies en interdépendance avec l'impédance Z0 pour assurer dans tous les cas l'alimentation du pont redresseur et à la disparition du neutre un courant de terre supérieur au seuil de courant différentiel déterminant la sensibilité de l'appareil de projection.

Il va de soi que l'on peut apporter aux modes de réalisation décrits des modifications. Ainsi, le commutateur statique bidirectionnel peut être également constitué à l'aide de transistors, thyristors, SBS, diacs ou interrupteurs à commande optique. De plus, le dispositif de sécurité est applicable à un réseau triphasé à neutre distribué pour détecter la disparition de deux phases et du neutre.

## Revendications

1. Dispositif de sécurité pour appareil de protection (10) d'installation électrique, l'appareil de protection (10) étant muni d'un détecteur de courant différentiel résiduel (21) traversé par un conducteur de phase (PH) et un conducteur de neutre (N), et d'un circuit électronique de traitement (22) du signal de courant différentiel délivré par le détecteur (21), le dispositif de sécurité présentant des moyens de polarisation de sécurité comprenant un commutateur statique bidirectionnel (31), connectés à une prise de terre (37), caractérisé en ce que :

le circuit électronique de traitement (22) est alimenté par un pont redresseur (32) relié aux conducteurs de phase (PH) et de neutre (N),

les bornes alternatives (32a, 32b) du pont redresseur (32) sont respectivement raccordées à des points (P1, P2) des parties du conducteur de phase (PH2) et de neutre (N2) situées en aval du détecteur de courant différentiel (21) de l'appareil de protection (10), et

le commutateur statique bidirectionnel (31) est relié par l'intermédiaire de deux impédances respectives (Z4, Z5 ; Z6, Z7 ; Z8, Z9) aux deux bornes alternatives (32a, 32b) du pont (32).

2. Dispositif de sécurité selon la revendication 1, caractérisé par le fait que le commutateur statique bidirectionnel (31) est un triac monté entre la prise de terre (37) et les bornes alternatives (32a, 32b) du pont redresseur, la gâchette du triac étant reliée par l'intermédiaire d'une résistance (R2) à la partie du conducteur de neutre (N2) située en aval du détecteur de courant différentiel (21).

3. Dispositif de sécurité selon la revendication 1, caractérisé par le fait que le commutateur statique bidirectionnel (31) comprend un couple de diodes Zener (ZE1, ZE2) montées en opposition ou en antiparallèle entre la prise de terre (37) et les bornes alternatives (32a, 32b) du pont redresseur (32).

4. Appareil de protection différentielle équipé du dispositif de sécurité selon l'une des revendications 1 à 3.

5. Appareil de protection différentielle selon la revendication 4, caractérisé par le fait que l'organe de test est susceptible d'agir sur un interrupteur à ouverture (B) associé au dispositif de sécurité et interposé sur la partie du conducteur de phase (PH2) ou de neutre (N2, 33) située en aval du détecteur de courant différentiel (21).

6. Appareil de protection différentielle selon la revendication 5, caractérisé par le fait qu'une impédance (Z0) fortement capacitive est prévue sur le conducteur (34) reliant la partie du conducteur de phase (PH2) située en aval du détecteur (21) de courant différentiel à une borne alternative (32b) du pont redresseur (32).

7. Appareil de protection différentielle selon la revendication 6, caractérisé par le fait que l'impédance (Z0) de liaison du pont redresseur (32) avec le conducteur de phase (PH2) et les impédances (Z4, Z5 ; Z6, Z7 ; Z8, Z9) de liaison avec les bornes alternatives (32a, 32b) du pont sont déterminées pour assurer l'alimentation du pont redresseur (32) et, à la disparition du neutre, un courant de terre supérieur au seuil de courant différentiel déterminant la sensibilité de l'appareil de protection.

## Claims

1. A safety device for an electric installation protection apparatus (10), said protection apparatus (10) comprising a residual differential current detector (21) through which pass a phase conductor (PH) and a neutral conductor (N), and an electronic circuit (22) for processing the differential current signal delivered by the detector (21) the safety device comprising safety biasing means comprising a static bidirectional switch (31) connected to a ground connection (37), characterized in that :

the electronic processing circuit (22) is supplied with power by a rectifier bridge (32) connected to the phase (PH) and neutral (N) conductors,

the AC terminals (32a, 32b) of the rectifier bridge (32) are respectively connected to points (P1, P2) of the parts of the phase (PH2) and neutral (N2) conductors situated downstream of the differential current detector (21) of the protection apparatus (10), and

the static bidirectional switch (31) is connected through two respective impedances (Z4, Z5 ; Z6, Z7 ; Z8, Z9) to the two AC terminals (32a, 32b) of the bridge.

2. The safety device as claimed in claim 1, characterized in that said static bidirectional switch (31) is a triac connected between the ground connection (37) and the AC terminals (32a, 32b) of the rectifier bridge, the gate of the triac being connected through a resistor (R2) to the part of the neutral conductor (N2) situated downstream of the differential current detector (21).

3. The safety device as claimed in claim 1, characterized in that said static bidirectional switch (31) comprises a pair of Zener diodes (ZE1, ZE2) connected in opposition or in antiparallel between said ground connection (37) and said AC terminals (32a, 32b) of the rectifier bridge (32).

4. A differential current protection apparatus equipped with the safety device as claimed in claims 1 to 3.

5. The differential current protection apparatus as claimed in claim 4 characterized in that the test means is capable of acting on a break switch (B) associated with the safety device and interposed in the part of the phase (PH2) or neutral (N2, 33) conductor situated downstream of the differential current detector (21).

6. The differential current protection apparatus as claimed in claim 5, characterized in that a highly capacitive impedance (Z0) is provided in the conductor (34) connecting the part of the phase conductor (PH2) situated downstream of the differential current detector (21) to an AC terminal (32b) of the rectifier bridge (32).

7. The differential current protection apparatus as claimed in claim 6, characterized in that the impedance (Z0) connecting the rectifier bridge (32) with the phase conductor (PH2) and the impedances (Z4, Z5 ; Z6 Z7 ; Z8, Z9) for connection with the AC terminals (32a, 32b) of the bridge are determined for ensuring the power supply of the rectifier bridge (32) and, on disappearance of the neutral, a ground current greater than the differential current threshold determining the sensitivity of the protection apparatus.


**Patentansprüche**

1. Sicherheitsvorrichtung für das Schutzgerät (10) einer elektrischen Einrichtung, wobei besagtes Schutzgerät (10) mit einem Differenzreststromdetektor (21) versehen ist, welcher von einem Phasenleiter (PH) und einem Nulleiter (N) durchquert wird, sowie mit einem elektronischen Schaltkreis (22) zur Verarbeitung des vom Detektor (21) gelieferten Differenzstromsignals und besagte Sicherheitsvorrichtung Sicherheitspolarisierungsmittel mit einem statischen Zweirichtungsschalter (31) aufweist, die an eine Erdung (37) angeschlossen sind, dadurch gekennzeichnet, dass :

der elektronische Verarbeitungskreis (22) von einer Gleichrichterbrücke (32) gespeist wird welche an die Phasenleiter (PH) und Nulleiter (N) angeschlossen ist,

die Wechselstromklemmen (32a, 32b) der Gleichrichterbrücke (32) jeweils an Punkte (P1, P2) von den Teilen des Phasenleiters (PH2) und Nulleiters (N2) angeschlossen sind, welche sich unterhalb des Differenzstromdetektors (21) des Schutzgerätes (10) befinden und

der statische Zweirichtungsschalter (31) durch jeweils zwei Impedenzen (Z4, Z5 ; Z6, Z7 ; Z8, Z9) an die zwei Wechselstromklemmen (32a, 32b) der Brücke (32) angeschlossen ist.

2. Sicherheitsvorrichtung nach Anspruch 1, dadurch gekennzeichnet, dass der statische Zweirichtungsschalter (31) ein zwischen die Erdung (37) und die Wechselstromklemmen (32a, 32b) der Gleichrichterbrücke montierter Triac ist und das Gate des Triac mittels eines Widerstandes (R2) an den Teil des Nulleiters (N2) angeschlossen ist, der unterhalb des Differenzstromdetektors (21) angeordnet ist.

3. Sicherheitsvorrichtung nach Anspruch 1, dadurch gekennzeichnet, dass der statische Zweirichtungsschalter (31) zwei Zenerdioden (ZE1, ZE2) aufweist, die in Opposition oder antiparallel zwischen der Erdung (37) und den Wechselstromklemmen (32a, 32b) der Gleichrichterbrücke montiert sind.

4. Differenzstromschutzgerät, das mit der Sicherheitsvorrichtung nach einem der Ansprüche 1 bis 3 ausgerüstet ist.

5. Differenzstromschutzgerät nach Anspruch 4, dadurch gekennzeichnet, dass das Testorgan einen Öffnungsschalter (B) beaufschlagt, welcher der Sicherheitsvorrichtung zugeordnet und auf dem Teil des Phasenleiters (PH2) oder des Nulleiters (N2, 33) angeordnet ist, welcher sich unterhalb des Differenzstromdetektors (21) befindet.

6. Differenzstromschutzgerät nach Anspruch 5, dadurch gekennzeichnet, dass eine stark kapazitive Impedenz (20) auf dem Leiter (34) vorgesehen ist, welcher den Teil des Phasenleiters (PH2), welcher sich unterhalb des Differenzstromdetektors (21) befindet, mit einer Wechselstromklemme (32b) der Gleichrichterbrücke (32) verbindet.

7. Differenzstromschutzgerät nach Anspruch 6, dadurch gekennzeichnet, dass die Impedenz (Z0), welche die Gleichrichterbrücke (32) mit dem Phasenleiter (PH2) verbindet und die Impedenzen (Z4, Z5 ; Z6, Z7 ; Z8, Z9) zur Verbindung mit den Wechselstromklemmen (32a, 32b) der Brücke so ausgelegt sind, dass sie die Gleichrichterbrücke (32) mit Strom versorgen und, bei Ausfall des Nulleiters, einen Erdstrom garantieren, der höher ist, als die Differenzstromschwelle, welche das Schutzgerät ansprechen lässt.

FIG.1

FIG.2

FIG.3

FIG.4